**Europäisches Patentamt**

**European Patent Office**

**Office européen des brevets**

(19)

(11) Veröffentlichungsnummer : **0 627 508 A1**

(12) ## EUROPÄISCHE PATENTANMELDUNG

(21) Anmeldenummer : **94810309.8**

(22) Anmeldetag : **27.05.94**

(51) Int. Cl.$^5$ : **D01G 15/28**, G01B 7/14

(30) Priorität : **04.06.93 CH 1681/93**

(43) Veröffentlichungstag der Anmeldung :
**07.12.94 Patentblatt 94/49**

(84) Benannte Vertragsstaaten :
**CH DE GB IT LI**

(71) Anmelder : **MASCHINENFABRIK RIETER AG**
**CH-8406 Winterthur (CH)**

(72) Erfinder : **Demuth, Robert**
**Maulackerstrasse 17**
**CH-8309 Nürensdorf (CH)**
Erfinder : **Faas, Jürg**
**Seuzacherstrasse 16**
**CH-8474 Dinhard (CH)**

(54) **Diagnosegerät.**

(57) Eine Karde umfasst einen Tambour (10) und zu diesem einstellbare, vorzugsweise einen Nennabstand aufweisende Teile, wie einen Briseur (50), einen stationären Deckel (14) Wanderdeckel und Abnehmer. Zum Überprüfen des vorhandenen bzw. bereits eingestellten Abstandes zwischen dem Tambour (10) und den diesem gegenüberliegenden Teilen wird ein Fühler (344,532) vorgesehen. Der Fühler kann auf der Seite der Anordnung oder in einem Bereich angeordnet sein, der zwischen den Seiten des Tambours liegt. Der Fühler kann von einem Deckelstab getragen werden.

Fig.10

EP 0 627 508 A1

Die Erfindung befasst sich mit Diagnose bzw. Uebewachungsgeräten für die Karde und Einstellsysteme, die durch solche Geräte gesteuert werden können.

Der Stand der Technik ist in DE 29 48 825, EP 3 84 297 und EP 3 86 551 festgehalten. Da die zutreffende Ausführung nachfolgend anhand der Figuren 1 und 2 beschrieben wird, wird hier nicht näher darauf eingegangen.

Die Erfindung, wie sie in verschiedenen Aspekten in den Ansprüchen festgehalten ist, stellt eine Weiterentwicklung der durch den Stand der Technik vorgelegten Prinzipien dar.

Es zeigt:

Fig. 1 eine Kopie der Fig. 3 aus der DE-PS 29 48 825,

Fig. 2 eine Zusammenlegung der Figuren 1 und 3 aus der DE-OS 39 13 996 (= EP 3 84 297),

Fig. 3 eine Kopie der Fig. 4 aus unserer schweizerischen Patentanmeldung Nr. 1150/93 vom 16. April 1993,

Fig. 4 ein Detail der Anordnung nach Fig. 3 zu einem grösseren Massstab, um die wichtigen Dimensionen darzustellen,

Fig. 5 eine schematische Darstellung einer ersten Ausführung der Erfindung,

Fig. 6 ein Diagramm zur Darstellung von Signalen, die durch eine Anordnung nach Fig. 5 gewonnen werden können,

Fig. 7 eine schematische Darstellung einer zweiten Ausführung,

Fig. 8 eine schematische Darstellung einer dritten Ausführung,

Fig. 9 eine schematische Darstellung einer weiteren Ausführung,

Fig. 10 eine entsprechende Darstellung einer Alternativlösung,

Fig. 11 eine Darstellung einer Ausführung, die durch eine Modifikation der Anordnung nach Fig. 2 erstellt wurde,

Fig. 12 eine schematische Darstellung einer Aktorik, die anhand der Signale aus dem Messystem nach Fig. 11 gesteuert werden kann,

Fig. 13 eine schematische Darstellung einer Aktorik, die anhand der Signale aus dem Messystem nach Fig. 2 oder Fig. 9 bzw. 10 gesteuert werden kann,

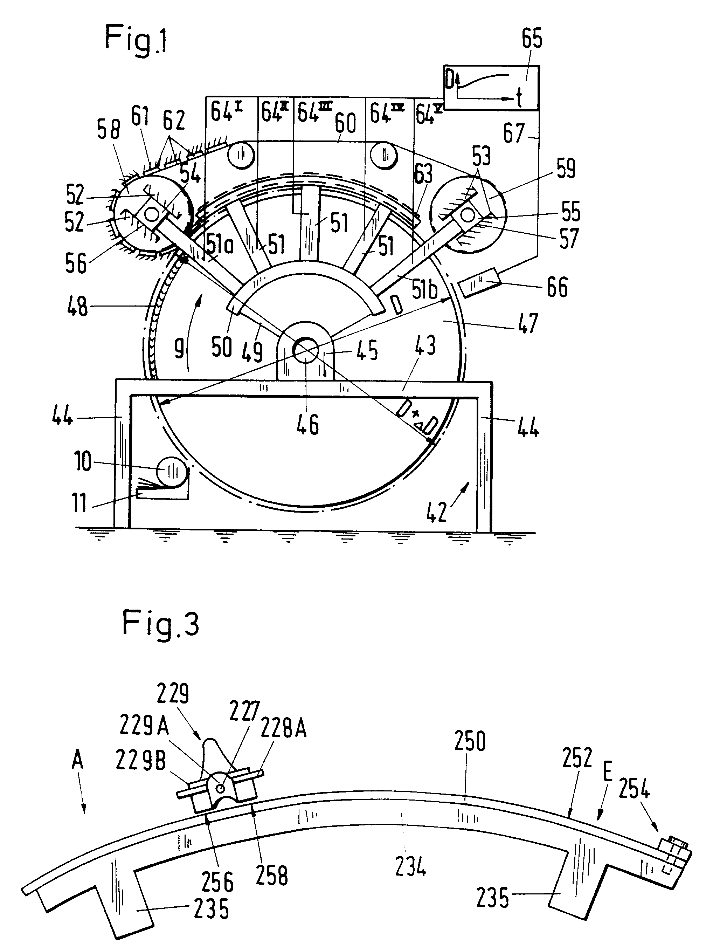

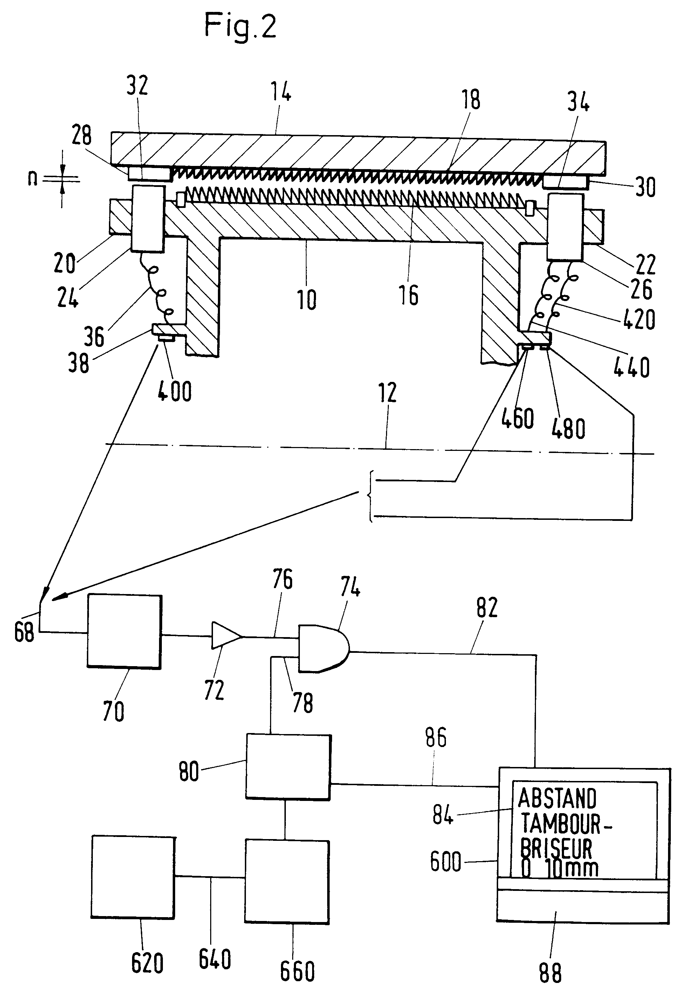

Als Einleitung wird der Stand der Technik anhand der Figuren 1 und 2 erklärt. Fig. 1 zeigt schematisch eine Karde in Seitenansicht.

## Die Lösung nach DE 2948825

Ein Maschinengestell besteht aus zwei Längsträgern 43 (von denen nur einer gezeigt ist), vier Abstützungen 44 (nur zwei gezeigt) und (nicht gezeigte) Querverbindungen. Auf jedem Längsträger 43 ist ein Tragelement 45 angebracht. Diese Tragelemente 45 dienen als Lagerung für die Achse 46 eines drehbar gelagerten Zylinders 47, welcher hier als Tambour einer nicht detailliert dargestellten Karde gedacht ist. Der Zylinder 47 wird durch nicht dargestellte Vorrichtungen um seine Achse 46 in Rotation versetzt (Pfeil g). Auf seiner Oberfläche trägt der Zylinder 47 eine Spitzengarnitur 48.

Das Tragelement 45 trägt in seinem oberen Teil ein mit ihm über einen Zwischenkörper 49 fest verbundenes Segment 50, auf welchem eine Reihe von auch als Stützelemente wirkende Stelleinrichtungen 51, 51a und 51b in radialer Anordnung sitzt.

Die Stütz- und Stelleinrichtungen 51a und 51b tragen je einen in zwei radialen Führungen 52 bzw. 53 gleitenden Körper 54 bzw. 55, in welchem die Achsen 56 bzw. 57 einer Deckelkettenumlenkrolle 58 bzw. 59 drehbar gelagert sind. Durch die Längenausdehnungen der Stelleinrichtungen 51a bzw. 51b kann die radiale Lage der Umlenkrollen 58 bzw. 59 gegenüber der Oberfläche des Zylinders 47 geändert werden. Um die zwei Rollen 58 und 59 läuft eine sogenannte Deckelkette 60, welche aus einer Reihe von parallel zueinander angeordneten, flachen, mit einer Spitzengarnitur 61 ausgerüsteten Querstäben 62 besteht, welche an den beiden Enden miteinander zu einer Kette verbunden sind.

Die Deckelkette 60 wird in der Zone zwischen den zwei Umlenkrollen 58 und 59 über die Zylinderoberfläche an jeder Seite mittels eines Führungsbogens 63 so geführt, dass zwischen den Spitzen der Garnitur des Zylinders 47 und denjenigen der Deckel ein bestimmter Abstand genau eingehalten wird. Die Führungsbogen 63 werden zu diesem Zweck durch drei Stelleinrichtungen 51 getragen. Eine der Umlenkrollen 58 bzw. 59 wird durch nicht gezeigte Vorrichtungen in Rotation versetzt, so dass sich die ganze Deckelkette 60 langsam bewegt, wobei der der Oberfläche des Zylinders 47 gegenüberstehende Trum der Kette 60 so durch die Führungsbogen 63 geführt wird, dass er eine kreisförmige Bewegung um das Zentrum der Achse 46 ausführt. Die Stelleinrichtungen 51a und 51b für die Positionierung der zwei Umlenkkrollen 58 und 59 und die Stelleinrichtungen 51 für die Abstützung und Positionierung der Führungsbogen 63 sind mittels Leitungen $64^I$ bis $64^V$ mit Steuereinrichtungen 65 verbunden, welche gemeinsam alle Stelleinrichtungen 51, 51a und 51b steuern. Die Steuereinrichtungen 65 sind mit einem die Temperatur t der Oberfläche des Zylinders 47 messenden Temperaturfühler 66 über die Leitung 67 verbunden und sind gemäss dem direkten Zusammenhang zwischen den Dimensionen des Zylinders 47, z.B. seinem Durchmesser D, und der Temperatur seiner Oberfläche vorprogrammiert.

Die Vorrichtung nach Fig. 1 arbeitet wie folgt. Wenn z.B. infolge einer Temperaturerhöhung, der Durchmesser D des Zylinders 47 grösser wird, wird diese Aenderung durch den Temperaturfühler 66 indirekt als Funktion der Temperatur t der Zylinderoberfläche ermittelt. Das über die Leitung 67 an die Steuereinrichtung 65 übermittelte Signal wird dort unter Ausnutzung der vorprogrammierten Beziehungen in ein der Durchmesservergrösserung $\Delta D$ entsprechendes Signal umgewandelt. Ueber die Leitungen $64^I$ bis $64^V$ werden die Stelleinrichtungen 51, 51a und 51b aktiviert, eine entsprechende Korrektur um $\Delta\frac{D}{2}$ vorzunehmen, wobei die Stelleinrichtung 51a und 51b die zwei Rollen 58 und 59 um diesen Korrekturabstand von der Oberfläche des Zylinders 47 weg entfernen, während die Stelleinrichtungen 51 den gleichen Effekt für den mit der Zylinderoberfläche zusammenwirkenden Trum der Deckelkette 60 durch eine Deformation der Führungsbogen 63 im Sinne einer Vergrösserung ihrer Radien um $\Delta\frac{D}{2}$ erzeugen. Somit bleiben die Arbeitsverhältnisse zwischen den zwei zylindrischen Flächen des Zylinders 47 und der Deckelkette 60 unverändert.

Es sei des weiteren vermerkt, dass die Art, auf die die Fasern bzw. das Faservlies auf der Oberfläche z.B. des Zylinders 47 ankommen, belanglos ist; lediglich als Beispiel für eine solche Zuführung wurde in Fig. 1 die Lieferwalze 10 mit Speiseplatte 11 eingezeichnet.

DE 2948825 erwähnt in einem einzigen Satz, dass der "Abstand zwischen den zylindrischen Flächen" direkt gemessen werden könnte. Dass dies keine leichte Aufgabe darstellt, kann man aus der nachfolgenden Beschreibung entnehmen. Die DE-Patentschrift berücksichtigt in den Ausführungen ausschliesslich einzelne Faktoren, die den Abstand beeinflussen.

### Die Lösung nach EP 384297

Die Fig. 2 zeigt mit 10 einen Längsquerschnitt durch einen Tambour (gleich dem Zylinder 47 der Fig. 1), der im Betrieb um die Drehachse 12 läuft. Der Schnitt ist in einer die Drehachse 12 enthaltenden Ebene vorgenommen, in der ein stationärer Deckel 14 dem Tambour 10 gegenüberliegt. Der Tambour 10 trägt an seiner Mantelfläche eine Stachelgarnitur 16, deren Arbeitsspitzen einen Nennabstand n von den Arbeitsspitzen einer entsprechenden Stachelgarnitur 18 des stationären Deckels 14 aufweisen sollen. Zur Messung dieser Abstände weist der trommelartige Tambour an seinen linken und rechten Zylinderflanschen 20 und 22 jeweils einen Fühler 24 bzw. 26 auf. Diesem gegenüberliegend sind am stationären Deckel Gegenstücke 28, 30 vorgesehen, deren den Fühlern zugewandte Flächen 32 bzw. 34 die gleiche Höhe aufweisen wie die Arbeitsspitzen 18. Die Arbeitsflächen 32, 34 können eben sein, in welchem Fall der Abstand n sich geringfügig während der Umlaufbewegung des Tambours an dem Besatz in einem Dekkel vorbei ändert, oder sie können eine Krümmung aufweisen, deren Krümmungszentrum an der Drehachse 12 liegt, wodurch der Abstand n während der Umlaufbewegung des Tambours 10 am stationären Deckel vorbei zumindest im wesentlichen konstant bleibt.

Bei den Fühlern 24 bzw. 26 kann es sich um jede bekannte Art von berührungslosen Abstandsmessfühlern handeln. Rein darstellungshalber sind in Fig. 2 zwei verschiedene Messfühler dargestellt, obwohl die beiden Fühler normalerweise gleich ausgebildet sein werden. Der Fühler 24 benötigt nur eine einzelne Signalleitung 36, welche zu einem auf einem Ringflansch 38 des Tambours angebrachten Schleifring 400 führt. Hier kann das Signal mittels eines üblichen Bürstenkontakts (nicht gezeigt) abgenommen werden. Im Falle des Fühlers 26 sind zwei Leitungen 420 und 440 vorgesehen, welche zu jeweiligen Schleifkontakten 460 und 480 führen.

Die Auswertelektronik ist in Form eines Mikrocomputers 600 ausgebildet. Der Drehantrieb 620 des Tambours ist mittels einer Welle 640 mit einem Tachoinitiator 660 gekoppelt, der als Taktquelle für die Synchronisierung des Mikroprozessors 600 mit den Messignalen dient. Die vom Messfühler 24 bzw. 26 kommenden Signale führen über den jeweiligen Schleifkontakt 400, 460, 480 und einen Bürstenkontakt 68 zu einem Digital/Analogwandler 70, sofern die Signale vom Fühler 26 nicht bereits in Digitalform erscheinen. Dem Digital/Analogwandler ist ein Verstärker 72 und ein UND-Gatter 74 nachgeschaltet. Mit anderen Worten wird das digitale verstärkte Messignal an dem einen Eingang 76 des UND-Gatters 74 angelegt. Am anderen Eingang 78 erscheint von einer Steuerschaltung 80 dann ein Signal, wenn beispielsweise der Fühler 26 dem Briseur bzw. dem Deckel 14 gegenüberliegt. Da in diesem Moment vorhandene Messignal wird dann über die Leitung 82 dem Mikrocomputer 600 zugeführt, der aus diesem Signal den Abstand Tambour - Briseur bzw. Tambour-Deckel ermittelt und den aktuellen Wert auf dem Bildschirm 84 darstellt.

Die Steuerschaltung 80 wird vom Mikrocomputer aus über die Leitung 86 so angesteuert, dass sie nur dann ein Signal an dem Eingang 78 anlegt, wenn, ausgehend von den Signalen des Tachoinitiators 660, die Fühler sich in der Winkellage befinden, in der eine Messung gegenüber dem zutreffenden gegenüberliegenden Teil möglich ist.

Die Betriebsperson kann über die Tastatur 88 auch andere Abstände abrufen, beispielsweise den Abstand zum Abnehmer, wozu ein entsprechendes Steuersignal über die Leitung 86 an die Steuerelektronik 80 geschickt wird, wodurch nur das jeweils erwünschte Messignal vom UND-Gatter 74 über die Leitung 82 am Mikrocomputer erscheint und von diesem ausgewertet und angezeigt wird.

Es ist einleuchtend, dass viele der beschriebenen Funktionen direkt vom Mikrocomputer aus durchgeführt werden können. Wenn es sich beispielsweise um einen Mikrocomputer handelt, der auch zum Betrieb der gesamten Karde benutzt wird, wobei dieser Computer auch die Steuersignale für die Regelung der Antriebe der Karde erzeugt, so kann das Signal der jeweiligen Messfühler dem Computer direkt zugeführt werden und die gesamte Messauswertung durch entsprechende Algorithmen im Mikrocomputer ermittelt werden.

Die Ausführung nach Fig. 2 stellt ein Beispiel einer technisch optimalen Lösung dar. Es können verschiedene kritische Messwerte von einem einzigen Messystem an einer wichtigen Stelle (nämlich wo Einstellungen ausgeführt werden) gewonnen werden. Der Aufwand zur Gewinnung aller Informationen aus diesem System ist aber beträchtlich, z.B. um Messwerte für den Abstand zwischen dem Tambour und einem vorbestimmten Element zu gewinnen, muss die momentane Winkelstellung des Messystems gegenüber der Achse des Tambours festgestellt werden (Synchronisierungsschritt). Wo das zutreffende "Element" sich über einen erheblichen Teil des Umfanges vom Tambour erstreckt (Wanderdeckelsatz), muss das gewonnene Signal noch zusätzlich ausgewertet werden. Der Aufwand wird sich nicht in allen Fällen (besonders bei Nachrüstungen) lohnen. Es gibt aber Umstände, wo das Gewinnen eines bestimmten Messwertes von grosser Bedeutung wäre.

Das Abnützungsproblem

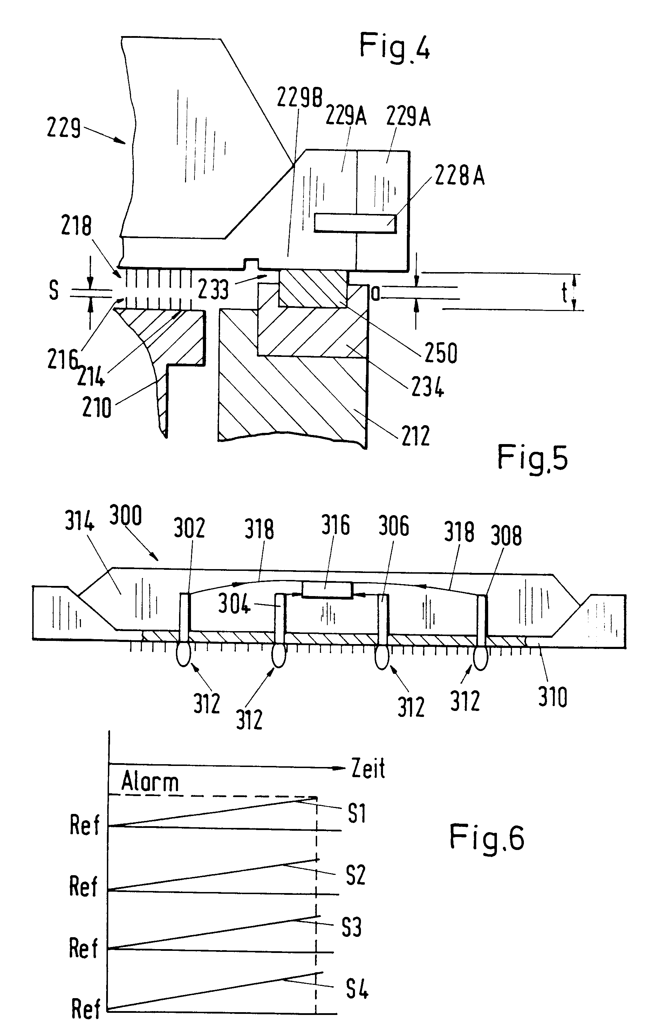

Die Fig. 3 zeigt eine Gleitführung für die Deckelstäbe einer Wanderdeckelkarde gemäss unserer schweizerischen Patentanmeldung Nr. 1150/93 vom 16. April 1993.

Ein wesentlicher Teil der Kardierarbeit wird zwischen den Deckelstäben 229 des Wanderdeckelsatzes und dem Tambour geleistet, während die Stäbe sich von der Einlaufstelle E (Fig. 3) bis zu einer Auslaufstelle A bewegen, wobei diese Bewegung in der gleichen Richtung wie die Drehung des Tambours (gleichläufig) oder der Tambourbewegung entgegengesetzt (gegenläufig) stattfinden kann.

Während seiner Bewegung zwischen der Einlauf- und der Auslaufstelle muss ein Deckelstab (bzw. seine Garnitur) einen möglichst genauen Abstand dem Tambour gegenüber einhalten. Dieser Abstand wird nicht durch den Deckelantrieb bestimmt, sondern durch Gleitführungen 252, die an den nach oben gerichteten Flächen von Seitenschildern oder Seitenwänden (nicht gezeigt) der Karde vorgesehen sind. Jede Gleitführung kann genau gegenüber der Drehachse des Tambours gebildet (und sogar eingestellt) werden, wie schon anhand der Fig. 1 erklärt wurde.

In der Praxis ist jede Gleitführung an einem jeweiligen Flexibelbogen 234 gebildet. Der Bogen 234 hat Ansätze 235, die mittels einstellbaren Befestigungen (in Fig. 3 nicht gezeigt - siehe aber die Stelleinrichtungen 51 in Fig. 1) am jeweiligen Seitenschild (nicht gezeigt) der Karde montiert sind. Durch Einstellung der Befestigungen kann der Flexibelbogen 234 mehr oder weniger gegenüber der Drehachse des Tambours gekrümmt werden, um die Gestaltung der Gleitführung gegenüber dem Tambour zu beeinflussen.

Gemäss CH 1150/93 wird ein Kunststoffelement 250 derart an dem Flexibelbogen 234 befestigt, dass es die Gleitfläche 252 für die Deckelstäbe 229 bildet. In einer einfachen Ausführung ist das Kuststoffelement in der Form eines Kunststoffstreifens vorhanden, welcher in einer Nute in der nach oben gerichteten Fläche des Bogens 234 eingesetzt ist. Die Dicke des Streifens ist grösser als die Tiefe der Nute, so dass der Streifen aus der Nute herausragt. Der hervorstehende Teil des Streifens (bzw. die nach oben gerichtete Fläche davon) bildet die vorerwähnte Gleitfläche für die Deckelstäbe. Das Element 250 erstreckt sich dem Bogen 234 entlang von einer Befestigung 254 weg, welche ausserhalb des Gebietes liegt, das von den Dekkelstäben 229 überstrichen wird. Diese Befestigung 254 befindet sich vor der Einlaufstelle E (in der Bewegungsrichtung der Deckelstäbe betrachtet).

Jeder Deckelstab 229 ist an jedem Ende mit einem "Deckelkopf" (siehe auch Fig. 4) versehen, der sowohl einen Gleiter 229B als auch eine Klemmvorrichtung 229A umfasst. Der Gleiter 229B ist mit dem Arbeitskörper des Stabes 229 aus einem Stück gebildet, während die Klemmvorrichtung 229A einen ersten, mit dem Gleiter aus einem Stück gebildeten Teil und einen zweiten entfernbaren Klemmteil umfasst. Der Klemmteil ist durch eine Schraube 227 an den ersten Teil befestigt, wobei ein Riemen 228A des Antriebssystems zwischen dem ersten und dem zweiten Teil geklemmt wird.

Die Gleiter 229B sind normalerweise mit je zwei Gleitflächen 256, 258 (Fig. 3) versehen, die je ca. 1/3 der Breite des Deckelstabes ausmachen und daher satt auf der gekrümmten Gleitfläche 252 des Kunstoffelementes 250 sitzen, wenn ein Deckelstab 229 gegenüber dem Flexibelbogen 234 seine Arbeitsstellung aufgenommen hat. Der Abstand S zwischen der Deckelgarnitur 218 und der Tambourgarnitur 216 wird durch die Gestaltung des Deckelstabes, das Kunststoffelement 250 und den Flexibelbogen 234 bestimmt.

Es kann nun angenommen werden, dass bei der Inbetriebsetzung einer Karde die Spitzen der Deckelstabgarnitur 218 einen Nennabstand "a" (Fig. 4) gegenüber der nach oben gerichteten Fläche 233 des Flexibelbogens 234 aufweisen. Dieser Abstand wird dadurch gewährleistet, dass ein Kunststoffstreifen 250 einer genau bestimmten Tiefe "t" verwendet wird und der Deckelstab 299 derart gestaltet wird, dass die Garniturspitzen sich gegenüber den Gleitflächen 256, 258 (Fig. 3) in einer genauen Position befinden. Der vorerwähnte Abstand "S" wird dann durch die Einstellung des Flexibelbogens 234 gegenüber dem Seitenschild 212 bestimmt, da bei der Inbetriebnahme auch davon ausgegangen werden kann, dass der Tambour genau gegenüber den Seitenschildern 212 montiert ist und dass die Spitzen der Tambourgarnitur 216 eine bestimmte Mantelfläche gegenüber dem Tambour bilden.

Der Streifen 250 ist aber als Verschleissteil konzipiert. Mit einer allmählichen Abnützung dieses Elementes während der Betriebszeit muss gerechnet werden. Unter Umständen findet auch erhebliche Abnützung am Gleiter 229B statt. Die Abnützung an den Garniturspitzen wird hier weitgehend vernachlässigt, weil sie durch andere Mittel berücksichtigt werden muss und ihre Auswirkungen durch diese Erfindung nicht beseitigt werden können. Um die letztgenannte Abnützung zu berücksichtigen, ist es allerdings von Vorteil, Nebenwirkungen durch Abnützung an anderen Stellen, innerhalb gegebener Toleranzgrenzen, ausschalten zu können. Hier soll diese Erfindung Beihilfe leisten.

Fig. 5 zeigt einen Deckelstab 300 (nachfolgend "Messstab" genannt), der eine erste Ausführung nach dieser Erfindung darstellt. Die Gestaltung des Stabes 300 entspricht derjenigen eines konventionellen Stabes 229 nach Fig. 4, wobei aber der neue Stab 300 als Träger für vier Fühler 302, 304, 306, 308 dient. Jeder Fühler ist in einer jeweiligen Bohrung in einer Seitenpartie 310 des Stabes 300 montiert, so dass sich jedes Tastfeld 312 der Fühler in der Richtung der gegenüberliegenden Mantelfläche des Tambours (in Fig. 5 nicht gezeigt) erstreckt.

Die Rückenpartie 314 des Messstabes 300 trägt eine Treiber-/Speichereinheit 316, die durch Leiter 318 (nur schematisch dargestellt) mit jedem Fühler verbunden ist. Die Einheit 316 versorgt das Fühlersystem mit Energie und speichert Signale, die von den Fühlern geliefert werden. Der Stab 300 stellt somit ein Diagnosegerät dar, das autonom arbeiten kann, da es mit einer eigenen Energieversorgung, Tastsystem (mit Signalerzeuger) und Signalspeicher versehen ist. Da aber der Stab 300 sonst jedem anderen Stab eines Wanderdekkelsystems gleich ist, kann ein konventioneller Stab 229 eines solchen Systems durch den Stab 300 ersetzt werden. Während der Bewegung dieses Messstabes 300 der Gleitführungen entlang tasten die Fühler 302, 304, 306, 308 dann den Abstand zwischen der unteren Fläche des Stabes und der gegenüberliegenden zylindrischen Fläche 214 des Tambours 210 ab. Dazu können bekannte Fühler, die berührungslos arbeiten, eingesetzt werden, wobei kapazitive Fühler bevorzugt werden.

Der Zustand des Messstabes 300, insbesondere seine Gleitflächen, kann vor dem Einsatz genau bestimmt werden. Allfällige Abweichungen der abgetasteten Abstände von den Sollwerten liegen dementsprechend in anderen Bereichen des Systems. Da der Kunststoffstreifen als Verschleissteil (Abnutzungselement) im System vorgesehen ist, können mit grosser Wahrscheinlichkeit abgetastete Abweichungen auf den Zustand des Streifens zurückgeführt werden.

Wenn der Messstab 300 über einen längeren Zeitraum in einer bestimmten Karde im Einsatz steht, ist mit einem Signalverlauf nach Fig. 6 zu rechnen. Die vier Signale S1 bis S4 wandern allmählich von einem (jeweiligen) Referenzpegel Ref über Zeit ab. Die Steilheit des Verlaufs muss für alle vier Fühler gleich sein, sonst deuten die Messignale auf ungleiche Abnutzung der beiden Gleitführungen. Nach einer bestimmten Betriebszeit wird die Abweichung vom Referenzpegel derart gross (der abgetastete Abstand hat sich derart geändert), dass ein Alarm abgegeben werden muss.

Es ist aber normalerweise nicht notwendig, ein Messstab 300 kontinuierlich in einer Karde in Einsatz zu halten. Nach einer gewissen Messperiode kann der Stab 300 aus der überwachten Karde entfernt und durch einen konventionellen Kardierstab ersetzt werden. Die gespeicherten Signale können abgelesen werden und gelöscht (downloading) oder der Speicher kann zur Auswertung entfernt und durch einen leeren Speicher ersetzt werden. Der Messstab ist dann zum Einsatz in einer anderen Karde bereit, vorausgesetzt, dass seine Gleitflächen noch einen akzeptablen Zustand aufweisen. Die Signale, die zur Auswertung anstehen, stellen dann einen Ausschnitt aus dem Gesamtverlauf nach Fig. 6 dar, wobei dieser Ausschnitt für den momentanen Zustand des Kunststoffstreifens kennzeichnend ist.

Ueber der geplanten Standzeit eines Kunststoffstreifens kann der bzw. ein Messstab 300 mehrere Male zur Kontrolle eingesetzt werden, bis der Grenzwert des Abstandes angenähert wird. Der Stab kann dann kontinuierlich im Einsatz stehen, bis das Alarmsignal erzeugt wird.

Es wäre auch möglich, die gespeicherten Signale periodisch abzulesen, ohne den Messstab bzw. den Speicher entfernen zu müssen. Dazu muss eine Signalkoppelung mit einem sich bewegenden Element erstellt werden. Die könnte z.B. mittels einer Lichtschranke durchgeführt werden, beispielsweise gemäss dem Prinzip, des in EP-A-295 406 gezeigt wurde. Da sich die Deckelstäbe eines Wanderdeckelsystems relativ langsam bewegen, kann genügend Information auch bei sich fortbewegendem Messstab gesendet werden, ohne eine zu hohe Uebertragunsrate zu erfordern. Es könnte natürlich auch eine Koppelung nach Fig. 2 eingesetzt werden.

Es können Mittel (nicht gezeigt) vorgesehen werden, um das Messystem an der Einlaufstelle E (Fig. 3) zu aktivieren und an der Auslaufstelle A zu deaktivieren. Falls die Einsatzzeit nur kurz ist, kann auf dieses Schalten verzichtet werden, wobei die Auswertung dann auf die zyklischen Veränderungen im Messignal (Rücklauf des Messstabes) abgestimmt werden muss. Im Falle eines längeren Einsatzes könnte das Messystem periodisch abgeschaltet werden, um Energie zu sparen. Es ist aber nicht wünschenswert, ein Diagnosestab auf diese Weise zu verwenden, da sich der Zustand des Stabes selbst beim kontinuierlichen Einsatz verschlechtern wird, so dass die Deutung der Signale über Zeit schwieriger wird.

Eine Anordnung nach Fig. 5 unterscheidet sich von einer Anordnung nach Fig. 2 darin, dass die Tastfelder der Fühler 302, 304, 306, 308 sich in den eigentlichen Arbeitsbereich der Karde erstrecken, während in einer Anordnung nach Fig. 2 die Fühler neben dem Arbeitsbereich stehen. Dies hat aber den Nachteil, dass sich sowohl das verarbeitete Material wie auch die sich bewegenden Garnituren im Tastfeld befinden. Dies führt zu Störungen im Messignal, so dass eine aufwendigere Signalauswertung (und allenfalls ein aufwendiger Treiber) erforderlich ist, um die eigentlichen Messdaten aus den Signalen zu gewinnen, z.B. mit speziellen Filtern. Der Vorteil des Abtastens im Arbeitsbereich kann daher leicht durch Kostennachteile wieder verloren gehen, besonders weil die eigentlichen Einstellungen der Karde in Seitenbereichen (neben dem Arbeitsbereich) ausgeführt werden, so dass die Kontrolle der Einstellungen eher in diesen Seitenbereichen durchgeführt werden sollte. Dabei wird angenommen, dass der Arbeitsbereich sich nach einer vorbestimmten Art und Weise im Vergleich zu den Einstellbereichen verhält. Ein Messstab nach Fig. 5 kann aber auf jeden Fall nützlich sein, wo es gilt, letztere Annahme zu prüfen.

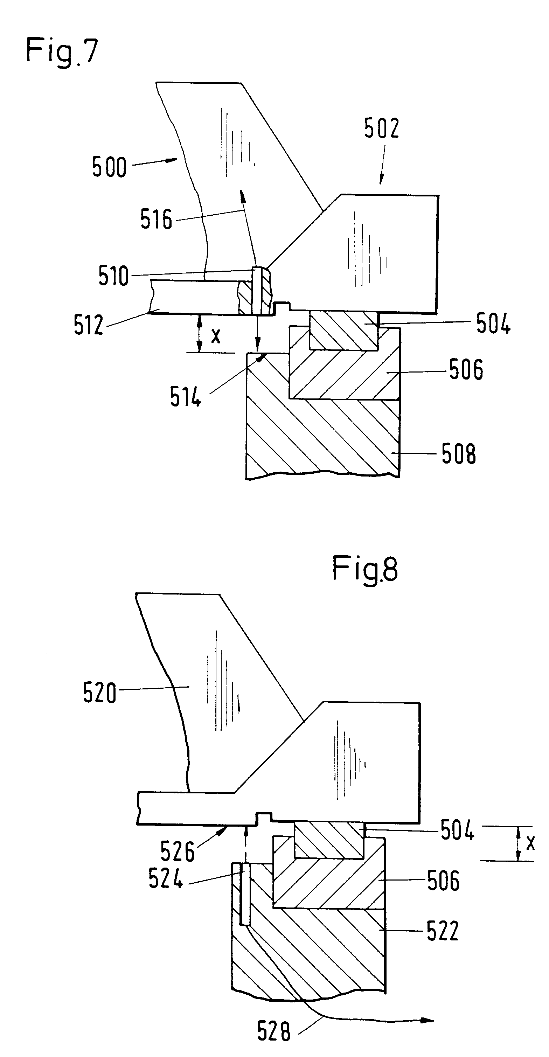

Wo man die Seitenbereiche kontrollieren will, das Tastgerät aber nicht auf den Tambour montieren will oder kann, gibt es weitere Möglichkeiten, wovon Beispiele schematisch in den Figuren 7 und 8 dargestellt werden.

Die Fig. 7 zeigt eine Messstabvariante ähnlich der Ausführung nach Fig. 5. Der Messstab ist mit dem Bezugszeichen 500, der Kopf an einem Ende mit 502 angedeutet. Der Kopf 502 gleitet auf einen Kunststoffstreifen 504, der in einer Nute im Flexibelbogen 506 eingesetzt ist. Der Bogen 506 selbst ist auf dem Seitenschild 508 der Karde montiert.

Ein Fühler 510 ist in der Seitenpartie 512 des Messstabes eingesetzt, so dass das Tastfeld des Fühlers bei der Bewegung des Stabes von der Einlauf- bis zur Auslaufstelle nach unten (in einer Anordnung nach Fig. 7) bis zur nach oben gerichteten Stirnseite 514 des Seitenschildes 508 reicht. Die dadurch abgetastete Fläche des Seitenschildes kann als eine Referenzfläche vorbereitet werden, so dass der Abstand X als Mass für die Einstellung des Messstabes gegenüber dem Tambour angenommen werden kann.

Die durch den Fühler 510 gewonnenen Messwerte werden als Ausgangssignale über die Leitung 516 an einen Speicher (nicht gezeigt) oder über eine Koppelung (nicht gezeigt) direkt an eine Auswertung geleitet. Der Fühler könnte natürlich derart angeordnet sein, dass der Abstand vom Messstab bis zur Oberfläche des Flexibelbogens 506 abgetastet wird. Wegen engen Platzverhältnissen wird es aber normalerweise leichter sein, auf das Seitenschild zu zielen. Ausserdem berücksichtigt die gezeigte Anordnung eine allfällige Neueinstellung des Bogens 506 gegenüber dem Seitenschild 508, was durch Abtasten der Oberfläche des Bogens selbst nicht möglich ist.

Die Anordnung nach Fig. 8 umfasst einen Kunststoffstreifen 504 und Flexibelbogen 506 ähnlich derjenigen der Fig. 7. Der in Fig. 8 dargestellte Deckelstab 520 ist aber kein Messstab, sondern eine konventionelle Ausführung, die zum ständigen Einsatz in der Karde vorgesehen ist. Der Seitenschild 522 ist in diesem Fall mit einem Fühler 524 versehen, der ein nach oben gerichtetes Tastfeld erzeugt. Dieses Feld erstreckt sich bis zur gegenüberliegenden Unterseite des Dekkelstabes, der momentan dem Fühler gegenübersteht. Die Dekkelstäbe des Deckelsatzes bewegen sich einer nach dem anderen am Fühler 524 vorbei. Dabei werden speziell dazu vorgesehene Referenzflächen 526 an den Unterseiten der Deckelstäbe abgetastet, um den Abstand X festzustellen. Da der Fühler 524 stationär angeordnet ist, kann eine Leitung 528 ohne Probleme Messignale an eine Auswertung (nicht gezeigt) weiterleiten.

Die Anordnungen nach Figur 7 und 8 ergeben verschiedene Resultate, so dass sie sogar gleichzeitig verwendet werden könnten. Die Variante der Fig. 8 tastet insbesondere Abnutzungen an den Gleitköpfen der Deckelstäbe 520 ab. Die Messwerte werden auch von allfälliger Abnutzung des Kunststoffstreifens 504 an der Messstelle beeinflusst. Sofern sich der Streifen gleichmässig abnutzt, sind diese Messwerte für den Zustand des Streifens über seiner ganzen Arbeitslänge kennzeichnend.

Wenn diese Gleichmässigkeit nicht gewährleistet ist, ergibt sich aus einer stationären Messstelle keine zuverlässigen Informationen zum Gesamtzustand des Streifens. Um solche Daten zu gewinnen, kann ein Messstab 500 nach Fig. 7 eingesetzt werden. Da der Messstab 500 einen vorbekannten Zustand aufweist bzw.

aufweisen kann, können damit Daten zu allfälligen Veränderungen des Zustandes vom Streifen 504 über seiner Länge gewonnen werden.

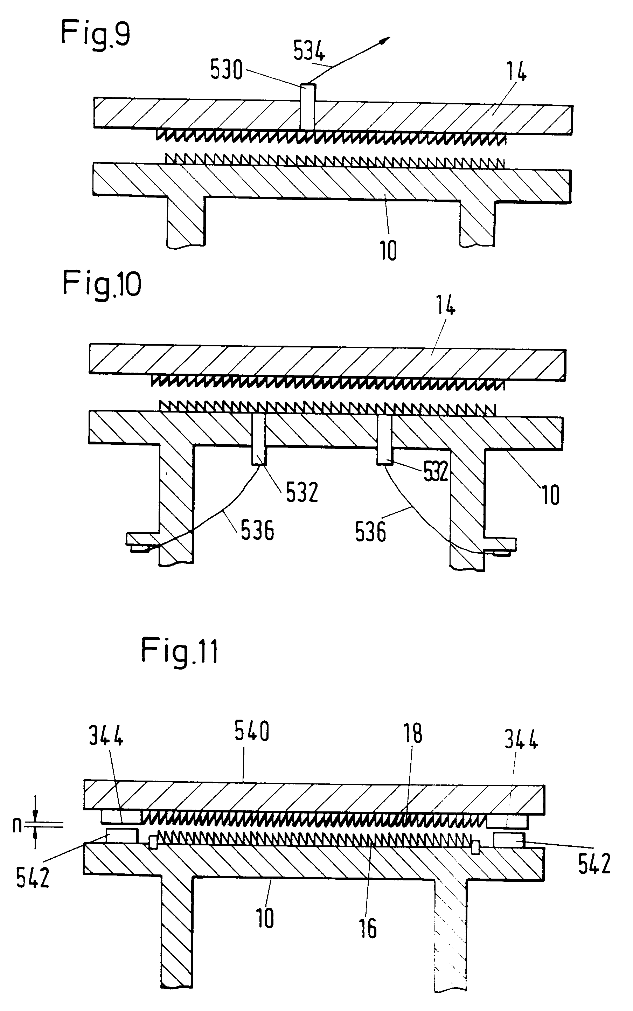

Fig. 9 und 10 zeigen zwei mögliche Varianten der Anordnung nach Fig. 2 im Hinblick auf die Anordnungen nach Fig. 5. In beiden neuen Fällen werden die Fühler 530 (Fig.9), 532 (Fig.10) im Arbeitsbereich (statt im Seitenbereich) vorgesehen. Die Bezugszeichen 14 bzw. 10 deuten wie in Fig. 2 auf einen stationären Deckelstab bzw. den Tambour.

Der einzige Fühler 530 in Fig. 9 tastet den Kardierabstand in der Mitte des Arbeitsbereiches ab und liefert Messignale kontinuierlich über eine Leitung 534 an eine nicht gezeigte Auswertung. Die beiden Fühler 532 der Variante nach Fig. 10 leiten ihre Signale über jeweilige Leitungen 536 an eine Koppelung, welche sie an die Auswertung (nicht gezeigt) leitet.

Die Anordnung nach Fig. 9 ist konstruktiv sehr einfach und der Betrieb eines solchen Systems ist unproblematisch. Die Auswertung der gewonnenen Signale ist aber schwierig, bzw. die erzielbaren Informationen sind sehr begrenzt. Das Feststellen von Abnutzungsunterschieden zwischen den linken und rechten Seiten ist hier besonders schwierig und allenfalls (mit einer vernünftigen Signalauflösung) unmöglich. Es könnten natürlich mehrere Fühler (z.B. nach Fig. 10 bzw. Fig. 5) vorgesehen werden, um die Signalauflösung zu verbessern - auf Kosten des konstruktiven Aufwandes und des Aufwandes für die Signalverarbeitung.

Die Anordnung nach Fig. 10 ist möglich, aber nicht wünschenswert. Die Fühler 532 im Arbeitsbereich des Tambours dürfen keine Auswirkung auf die technologische Leistung der Karde aufweisen. Sie dürfen auch keine Wirkung auf die Festigkeit bzw. Auswuchtung des schnelldrehenden Tambours verursachen.

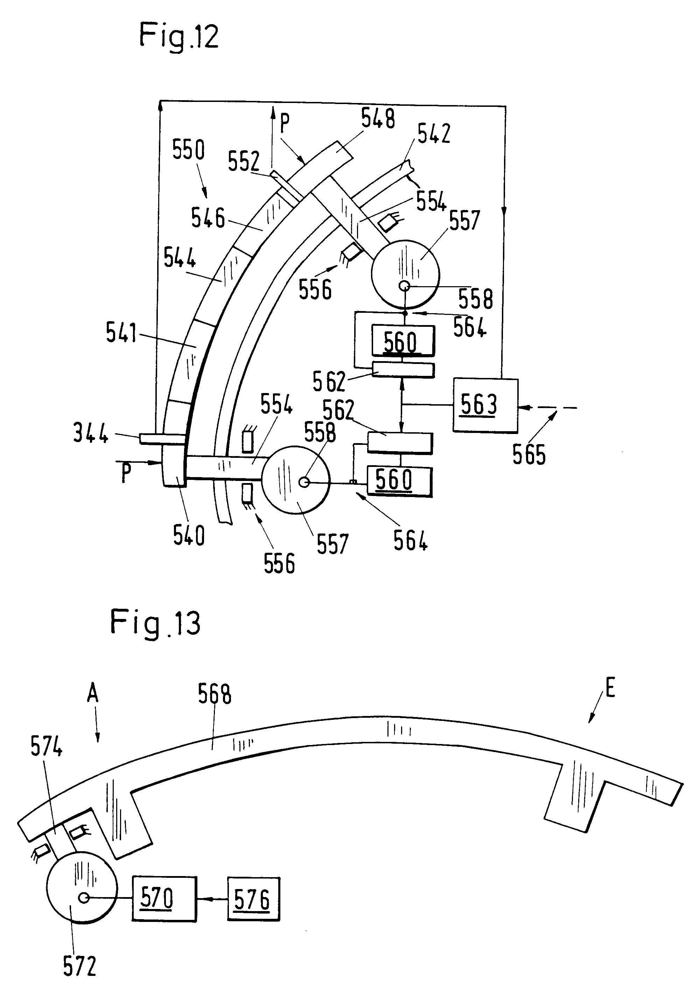

Die Fig. 11 zeigt eine weitere Modifikation der Anordnungen nach den Figuren 2, 9 und 10. Diese Variante stellt eine durchaus praxistaugliche Lösung dar, die zum "Selbsteinstellen" der Karde verwendet werden kann. Diese Sensorik wird deshalb in Fig. 12 schematisch zusammen mit einer Aktorik dargestellt, welche zum automatischen Einstellen des stationären Deckels dem Tambour gegenüber verwendet werden kann.

Die Anordnung umfasst auch in diesem Fall einen stationären Deckelstab 540, der mittels einer Befestigung (die nachfolgend anhand der Fig. 12 näher beschrieben wird) am Gestell der Karde befestigt wird. Der Tambour ist an seinen Seitenpartien mit Gegenstücken 542 für Fühler 344 versehen, die in den Seitenpartien des Deckelstabes eingesetzt sind. Weitere Fühler (nicht gezeigt) könnten im Arbeitsbereich vorgesehen werden, würden dabei aber am Prinzip nichts ändern. Die Abtastung des Abstandes an jeder Messstelle muss nicht mehr beschrieben werden, da sie wie im System nach Fig. 2 erfolgt, wobei aber die Messignale nicht mehr über eine Koppelung von einem drehbaren Element (vom Tambour) übertragen werden müssen.

Die Anordnung nach Fig. 12 umfasst eine Gruppe von fünf stationären Deckelstäben 540, 541, 544, 546, 548, die durch nicht gezeigte Mittel zu einer Einheit 550 verbunden sind. Der Stab 540 ist anhand der Fig. 11 schon beschrieben worden, und der Stab 548 ist mit einem ähnlichen Fühlerpaar ausgebildet, wobei nur ein Fühler 552 von diesem Paar in Fig. 12 sichtbar ist. Die Fühler 552 tasten die gleichen Gegenstücke 542 wie die Fühler 344 ab.

Die Einheit 550 wird durch geeignete, nicht gezeigte Mittel, radial nach innen, (in Richtung der Pfeile P) gedrückt. Die Stellung jeder Ecke der Einheit gegenüber dem Tambour wird durch einen jeweiligen Anschlag 554 bestimmt, der in einer jeweiligen Führung 556 am Gestell radial bewegbar ist. Es sind in Fig. 12 nur zwei solche Anschläge sichtbar - die anderen beiden sind auf der anderen Seite der Karde ähnlich ausgebildet und angeordnet.

Die inneren Enden der Anschläge 554 stossen auf jeweilige Exzenternocken 556, die auf jeweiligen Achsen 558 drehbar am Gestell montiert sind. Jede Achse 558 ist durch einen jeweiligen positionsgeregelten Motor 560 in einer genauen Winkelstellung einstellbar. Jeder Motor umfasst dazu eine eigene Regeleinheit 562 mit einem Positionssensor 564, der die momentane Winkelstellung der Motorachse (und daher der Achse 558) abtastet. Die Soll-Position für jeden Regler 562 wird durch die Auswertung 563 festgelegt, welche die Messignale von den Fühlern 344, 552 erhält. Statt positionsgeregelter Motoren wäre es z.B. möglich, Schrittmotoren einzusetzen, wobei eine Sollstellung an einem Eingang 565 an der Auswertung 563 eingegeben werden könnte, und die Anzahl der nötigen Schritte des Einstellmotors entsprechend der Sollstellung und dem von den Fühlern festgestellten IstWerte durch die Auswertung 563 ermittelt werden könnte. Die durch das Druckmittel erzeugten Kräfte in der Richtung der Pfeile P drücken die Einheit 550 ständig gegen die Anschläge.

Fig. 13 zeigt eine ähnliche Anordnung zum automatischen Einstellen des Deckelstablaufes mittels der Neueinstellung des Flexibelbogens 568 (vgl. Fig. 1 und Fig. 3). Im Gegensatz zu Fig. 1 wird hier nur an der Auslaufstelle A automatisch eingestellt. Der Einstellmotor ist mit dem Bezugszeichen 570, der Exzenternocken mit dem Bezugszeichen 572 und der Anschlag mit dem Bezugszeichen 574 angedeutet. Die Anordnung der Verstelleinrichtung ist an der anderen Seite der Karde gleich. Ein krafterzeugendes Mittel (nicht gezeigt) zieht den Bogen 568 radial nach innen in Berührung mit dem Anschlag 574. Die Auswertung ist in Fig. 13 mit dem Zeichen 576 angedeutet. Sie ist mit einem Messystem (nicht gezeigt) verbunden, welches die Einstellung der Deckelstäbe gegenüber dem Tambour an der Auslaufstelle A misst. Ein solches System kann nach Fig. 2, 5, 7, 8, 9 oder 10 gebildet werden.

Die Anordnung nach Fig. 2 kann auch zum automatischen Einstellen des Abnehmers gegenüber dem Tambour verwendet werden, z.B. mittels einer Verstelleinrichtung nach EP 386551.

Die Erfindung ist nicht auf die Anwendung in Kombination mit einem Flexibelbogen eingeschränkt, der mit einem Kunststoffstreifen versehen ist. Der Bogen kann von einer konventionellen Konstruktion sein oder z.B nach CH 681 017 bzw. JP 55-172 377 oder nach einer unserer schweizerischen Patentanmeldungen Nr. 1151/93 vom 16. April 1993 bzw. 1156/93-9 vom 19. April 1993 gestaltet sein.

Die Erfindung ist auch im Zusammenhang mit Deckelstab-Gleitführungen anwendbar, die anders gestaltet sind, z.B. die ein Metallband, vorzugsweise ein Stahlband ähnlich der Bänder nach DE 565218 bzw. EP 94781 aufweisen. Das Band würde sich mindestens über den Arbeitsbereich des Bogens von der Einlaufstelle E bis zur Auslaufstelle A erstrecken und wäre vom Bogen gestützt. Der Bogen selbst könnte einen konventionellen Aufbau aufweisen. Mindestens die den Deckelstäben zugewandte Fläche des Bandes könnte beschichtet werden, vorzugsweise mit einem reibungsarmen Beschichtungsstoff, z.B. sind Teflon- oder Metall-Kunststoffverbindungen (z.B. Ni-PTFE) als Beschichtung vorteilhaft.

## Patentansprüche

1. Karde mit einem Tambour (10) und zu diesem einstellbaren Teilen und mit Mitteln zum Ueberprüfen des vorhandenen bzw. bereits eingestellten Abstandes zwischen dem Tambour (10) und mindestens einem diesem gegenüberliegenden Teil (14, 50) und zum Erzeugen eines entsprechenden Signals, dadurch gekennzeichnet, dass das genannte Mittel einen Fühler umfasst, der in einem Bereich angeordnet ist bzw. einem Bereich gegenübersteht, der zwischen den Seiten des Tambours liegt.

2. Karde mit einem Tambour (10) und zu diesem einstellbaren Teilen und mit Mitteln zum Ueberprüfen des vorhandenen bzw. bereits eingestellten Abstandes zwischen dem Tambour (10) und mindestens einem diesem gegenüberliegenden Teil (14, 50) und zum Erzeugen eines entsprechenden Signals, dadurch gekennzeichnet, dass das genannte Mittel einen Fühler umfasst, der vom genannten gegenüberliegenden Teil getragen ist, so dass das Tastfeld des Fühlers mindestens zeitweise auf eine vorbestimmte Fläche des Tambours gerichtet wird.

3. Karde mit einem Gestell, einem Tambour (10) und zu diesem einstellbaren Teilen und mit Mitteln zum Ueberprüfen des vorhandenen bzw. bereits eingestellten Abstandes zwischen vorbestimmten Teilen und zum Erzeugen eines entsprechenden Signals, dadurch gekennzeichnet, dass das Mittel einen Fühler umfasst, der den Abstand zwischen einer Gestellpartie und einem dieser Partie gegenüber eingestellten Kardenteil abtastet und ein entsprechendes Signal erzeugt.

4. Karde mit einem Gestell, einem Tambour (10) und zu diesem einstellbaren Teilen und mit Mitteln zum Ueberprüfen des vorhandenen bzw. bereits eingestellten Abstandes zwischen vorbestimmten Teilen und zum Erzeugen eines entsprechenden Signals, dadurch gekennzeichnet, dass das Mittel an einem Deckelstab vorgesehen ist.

5. Karde mit einem Gestell, einem Tambour (10) und zu diesen einstellbaren Teilen und mit Mitteln zum Ueberprüfen des vorhandenen bzw. bereits eingestellten Abstandes zwischen vorbestimmten Teilen und zum Erzeugen eines entsprechenden Signals, dadurch gekennzeichnet, dass eine Einstellaktorik und eine die Aktorik beeinflussende Steuerung vorgesehen ist, zusammen mit einer Verbindung, um das genannte Signal an die Steuerung zu leiten.

6. Karde nach einem der vorangehenden Ansprüche 1 bis 4, dadurch gekennzeichnet, dass der Fühler von einem stationären Teil der Karde getragen wird.

7. Karde nach Anspruch 6, dadurch gekennzeichnet, dass der stationäre Teil ein stationäres Deckelelement ist.

8. Karde nach Anspruch 6, dadurch gekennzeichnet, dass der stationäre Teil ein Seitenschild der Karde ist.

9. Karde nach Ansprüch 4, dadurch gekennzeichnet, dass der Fühler von einem Deckelelement eines Wanderdeckelsatzes getragen ist.

10. Karde nach Anspruch 9, dadurch gekennzeichnet, dass das genannte Deckelelement als Messelement gebildet ist.

11. Karde nach Anspruch 10, dadurch gekennzeichnet, dass das Messelement mit einem Signalspeicher versehen ist.

12. Karde nach Anspruch 10 oder 11, dadurch gekennzeichnet, dass das Messelement als Ersatz für ein Deckelelement des Wanderdeckelsatzes gebildet ist.

13. Karde nach Anspruch 5, dadurch gekennzeichnet, dass die Karde auch nach einem der Ansprüche 1 bis 4 bzw. 6 bis 12 gebildet ist und das Signal an die Steuerung für die Aktorik geliefert wird.

14. Karde nach Anspruch 5 oder 13, dadurch gekennzeichnet, dass die Aktorik zum Einstellen eines stationären Dekkelelementes gebildet ist.

15. Karde nach Anspruch 5 oder 13, dadurch gekennzeichnet, dass die Aktorik zum Einstellen des Flexibelbogens angeordnet ist.

Fig.1

Fig.3

# Fig.2

Fig.4

Fig.5

Fig.6

12

## Fig.7

500
502
516
510
512
X
514
504
506
508

## Fig.8

520
504
X
526
524
506
522
528

**Fig.9**

**Fig.10**

**Fig.11**

Fig.12

Fig.13

**Europäisches Patentamt**

# EUROPÄISCHER RECHERCHENBERICHT

Nummer der Anmeldung

EP 94 81 0309

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | DE-A-42 35 610 (TRÜTZSCHLER GMBH & CO.KG) * das ganze Dokument * | 1-7 | D01G15/28 G01B7/14 |
| A | --- | 9-12 | |
| A | DE-A-41 15 960 (SPINNBAU GMBH) * Spalte 3, Zeile 55 – Spalte 5, Zeile 18; Abbildungen 1-4 * | 1-3 | |
| D,A | --- EP-A-0 384 297 (MASCHINENFABRIK RIETER AG) * das ganze Dokument * | 1-4 | |
| A | --- WO-A-93 07314 (CARDING SPECIALISTS(CANADA)LTD) * Seite 6, Absatz 7 – Seite 9, Absatz 5; Anspruch 1; Abbildungen 2,3 * ----- | 1,15 | |

**RECHERCHIERTE SACHGEBIETE (Int.Cl.5)**

D01G
G01B
G05B

Der vorliegende Recherchenbericht wurde für alle Patentansprüche erstellt

| Recherchenort | Abschlußdatum der Recherche | Prüfer |
|---|---|---|
| DEN HAAG | 26. August 1994 | Munzer, E |

EPO FORM 1503 03.82 (P04C03)